# EUROPÄISCHE PATENTSCHRIFT

(11) **EP 0 753 717 B1**
(45) Veröffentlichungstag und Bekanntmachung des Hinweises auf die Patenterteilung: **16.10.2002**
(21) Anmeldenummer: 96110810.7
(22) Anmeldetag: 04.07.1996
(51) Int. Cl.: G01B 5/004, G01B 7/004, G01B 21/04, G01D 1/10, B23Q 17/20

(54) **Verfahren und Vorrichtung zur Koordinatenmessung an Werkstücken**
Method and apparatus for measuring coordinates of workpieces
Méthode et appareil pour mesurer les coordonnées de pièces usinées

(30) Priorität: 13.07.1995 DE 19525592
(43) Veröffentlichungstag der Anmeldung: 15.01.1997
(73) Patentinhaber: Carl Zeiss, 89518 Heidenheim (Brenz) (DE); Carl-Zeiss-Stiftung trading as Carl Zeiss, 89518 Heidenheim (Brenz) (DE)
(72) Erfinder: Fuchs, Anton, 89558 Böhmenkirch (DE); Grupp, Günter, 89558 Böhmenkirch (DE)

(56) Entgegenhaltungen:
- EP-A- 0 025 485
- EP-A- 0 223 970
- EP-A- 0 605 140
- WO-A-89/08817
- DE-A- 4 204 602
- DE-C- 4 316 236
- US-A- 4 965 499
- PATENT ABSTRACTS OF JAPAN vol. 011, no. 278 (M-623), 9.September 1987 & JP 62 077178 A (NISSAN MOTOR CO LTD), 9.April 1987,
- PATENT ABSTRACTS OF JAPAN vol. 010, no. 206 (P-478), 18.Juli 1986 & JP 61 047502 A (MITSUTOYO MFG CO LTD), 8.März 1986,
- PATENT ABSTRACTS OF JAPAN vol. 017, no. 705 (M-1534), 22.Dezember 1993 & JP 05 245740 A (NAKAMURATOME SEIMITSU KOGYO KK), 24.September 1993,

## Beschreibung

Die Erfindung betrifft ein Verfahren zur Koordinatenmessung an Werkstücken mit einem Tastkopf der ein Signal bei Kontakt mit dem zu vermessenden Werkstück erzeugt, sowie ein zur Durchführung des Verfahrens geeignetes Koordinatenmeßgerät.

In der Koordinatenmeßtechnik unterscheidet man zwischen zwei verschiedenen Typen von Tastköpfen. Tastköpfe vom sogenannten schaltenden Typ liefern bei Berührung mit dem Werkstück entweder ein Schaltsignal, das z.B. von elektrischen Schaltern in den Lagerstellen des beweglichen Taststifts gewonnen wird, oder ein impulsförmiges Signal, das beispielsweise von hochempfindlichen piezoelektrischen Elementen im oder in der Nähe des Taststifts erzeugt wird.

Es sind auch schaltende Tastköpfe bekannt, die im Zuge des Antastvorganges zwei unterschiedliche Signale, ein Piezosignal und zusätzlich ein Schaltsignal aus den Lagerstellen des ausgelenkten Taststiftes erzeugen. Beide Signale sind dann zeitlich etwas gegeneinander versetzt, da der Schaltkontakt später öffnet als der empfindlichere Piezokristall erregt wird. Derartige Tastköpfe sind beispielsweise in der DE-OS 38 31 974 sowie der US-PS 41 77 568 beschrieben.

Tastköpfe vom messenden Typ liefern permanent ein der Auslenkung des nachgiebigen Taststifts in den drei Koordinatenrichtungen proportionales Signal. Solche Tastköpfe lassen sich jedoch nicht nur zum kontinuierlichen Scannen von Werkstücken, sondern auch für Einzelpunktmessungen einsetzen, indem durch das Setzen geeigneter Triggerschwellen aus dem der Auslenkung proportionalem Signal ein Schaltsignal erzeugt wird.

Um die Koordinaten des Antastpunktes an einem Werkstück mit einem Tastkopf vom schaltenden Typ zu bestimmen ist man bisher folgendermaßen vorgegangen:

Die Zählerstände der Meßsysteme (Maßstabsysteme) des Koordinatenmeßgerätes wurden dann, wenn z.B. die Intensität des vom Piezokristall abgegebenen Signales eine vorgegebene Triggerschwelle überschritt, in einem Zwischenspeicher festgehalten. Traf innerhalb eines vorgegebenen Zeitraums von z.B. 200ms in der Maschinensteuerung das zweite Schaltsignal aus den Lagerstellen ein, wurde die Antastung als gültig erkannt und anschließend der zwischengespeicherte Positionsmeßwert an den Rechner des Koordinatenmeßwertes übergeben. Im anderen Falle veranlaßte die Steuerung des Koordinatenmeßgerätes eine Wiederholung der Messung. In diesem Falle ging die Steuerung davon aus, daß es sich bei dem Piezosignal nicht um ein Signal handelte, das den Kontakt mit dem Werkstück anzeigt, sondern beispielsweise ein durch Vibration oder Lärm aus der Umgebung, den Lagern oder den Antrieben der Maschine verursachtes Falschsignal, das zu einer sogenannten "Antastoptimierung" führt, bei der die fragliche Position nochmals von der Maschine angefahren wird.

Auch in der EP-B1 0 025 485 ist ein dem oben dargestellten sehr ähnliches Verfahren beschrieben.

Das bekannte Verfahren arbeitet zwar in vielen Situationen zufriedenstellen, führt jedoch bei einigen Anwendungsfällen zu ungültigen Antastungen. Wenn beispielsweise weiche Teile aus Aluminium oder Kunststoff oder überhaupt Werkstücke mit geringen Antastgeschwindigkeiten vermessen werden, bleibt das Signal des Piezoelementes aus bzw. geht im Störsignalpegel unter. In solchen Fällen bringt auch eine Wiederholung der Messung keine anderen Ergebnisse, es muß dann entweder die Antastgeschwindigkeit erhöht werden oder es muß allein das elektromechanische Schaltsignal aus den Lagerstellen die Funktion des Antastsignals übernehmen. Damit verbunden ist jedoch eine Einbuße an Meßgenauigkeit, da das Schaltsignal aus den Lagestellen zu einem späteren Zeitpunkt auftritt als das Signal des Piezoelementes und somit nicht mehr die exakten Kontaktkoordinaten des Antastpunktes charakterisiert.

Probleme, den exakten Antastzeitpunkt zu bestimmen, bereiten auch lange, dünne Taststifte. Beim Arbeiten damit ergeben sich für das Tastsignal nur geringe Amplituden und der Tastsignalverlauf streut stark.

Aus der DE 42 04 602 ist ein Verfahren bekannt, mit dem der Antastzeitpunkt trotz der eingangs genannten Probleme genauer bestimmt werden kann. Hierbei wird das Tastsignal mit vorabgespeicherten Mustersignalen korreliert und der exakte Antastzeitpunkt mit Hilfe des Signalverlaufs des Mustersignals bestimmt. Da die Tastsignalverläufe jedoch von einer relativ großen Anzahl von Parametern abhängen, sind sehr viele verschiedene Mustersignale aufzunehmen und zu speichern und müssen diese entsprechend den bei der eigentlichen Messung vorliegenden Parametern vorselektiert werden, wenn das Verfahren zufriedenstellende Ergebnisse liefern soll.

In der DE-PS 43 16 236 wird vorgeschlagen, den exakten Antastzeitpunkt dadurch zu bestimmen, daß die aufsteigende Flanke des Tastsignals durch eine geeignete Kurve approximiert und diese auf den Wert U = 0 extrapoliert wird. Es hat sich jedoch gezeigt, daß der zeitliche Verlauf des Tastsignals insbesondere auch der aufsteigenden Flanke stark streut. Je nachdem, welcher Teil der Flanke für die Kurveneinpassung ausgewählt wird, ergeben sich völlig andere Werte für den daraus extrapolierten Antastzeitpunkt, so daß dieses Verfahren nicht zufriedenstellend arbeitet.

Es ist die Aufgabe der vorliegenden Erfindung, ein Verfahren zur Koordinatenmessung an Werkstücken anzugeben, mit dem die vorstehend geschilderten Nachteile überwunden werden und der Antastzeitpunkt möglichst zuverlässig bestimmt werden kann.

Diese Aufgabe wird durch ein Verfahren mit den im Anspruch 1 angegebenen Merkmalen und einer Vorrichtung mit den im Anspruch 11 angegebenen Merkmalen gelöst.

Gemäß der Erfindung wird das Tastsignal mindestens einmal, gegebenenfalls jedoch auch mehrfach nach der Zeit differenziert und es werden die erste und/oder höhere Ableitungen des Tastsignalverlaufs zur Ermittlung des genauen Antastzeitpunkts ausgewertet. Es hat sich nämlich gezeigt, daß die zeitlichen Änderungen des Taststignals, insbesondere auch die dritte Ableitung, die den sogenannten Ruck, d.h. die zeitliche Änderung der Beschleunigung beschreibt, sehr viel empfindlicher auf einen Antastvorgang reagieren als das Tastsignal selbst. Hingegen zeigen die üblicherweise dem Tastsignal überlagerten Störungen, beispielsweise Einflüsse von Umgebungsschall, keine derartigen Einflüsse auf die höheren Ableitungen des Tastsignals.

Es ist deshalb möglich, den exakten Antastzeitpunkt zu erkennen, indem auf eine oder mehrere der zeitlichen Ableitungen des Tastsignals Triggerschwellen gesetzt werden, deren Erreichen bzw. Überschreiten dann den Antastzeitpunkt ergibt.

Zweckmäßig sind diese Triggerschwellen einstellbar und können auch automatisch an die Rauschamplitude auf der Tastsignalleitung angepaßt werden.

Die zeitliche Differenzierung des Tastsignals kann analog erfolgen oder mit Hilfe von Digitalrechnern, in denen das gespeicherte Tastsignal nachträglich differenziert und sodann auf den Antastzeitpunkt und die damit zusammenhängenden Antastkoordinaten rückgerechnet wird.

Das Verfahren erlaubt es, den genauen Antastzeitpunkt aus dem Verlauf des Tastsignals durch einen robusten und wenig aufwendigen Algorithmus sicher zu erkennen und zwar auch dann, wenn das Signal von vielen unterschiedlichen und teilweise zufälligen Faktoren wie dem Werkstoff des zu vermessenden Werkstücks, der Geometrie und dem Material der Tasterkombination, der Antastrichtung, und der Antastgeschwindigkeit, dem Winkel zur Werkstückoberfläche, oder dem Fahrverhalten der Maschine etc. abhängt.

Weitere Vorteile der Erfindung ergeben sich aus der nachfolgenden Beschreibung von Ausführungsbeispielen anhand der Figuren 1 bis 3 der beigefügten Zeichnungen.
- Figur 1: ist ein vereinfachtes Blockschaltbild, das die wesentlichen für die Signalverarbeitung des Tastsignals entsprechend dem erfindungsgemäßen Verfahren erforderlichen Komponenten zeigt;
- Figur 2 a - d: sind Diagramme, in denen der zeitliche Verlauf des Tastsignals vor, während und nach einem Antastvorgang dargestellt ist. Im einzelnen zeigt Figur 2a das ursprüngliche Tastsignal, Figur 2b die erste Ableitung des Tastsignals, Figur 2c die zweite Ableitung des Tastsignals und Figur 2d die dritte Ableitung des Tastsignals, wobei in allen Fällen die Signalverläufe nach Gleichrichtung bzw. Absolutwertbildung dargestellt sind;
- Figur 3: ist ein Flußdiagramm, in dem die Tastsignalauswertung zur Bestimmung des exakten Antastzeitpunkts für das erstgenannte Verfahren im einzelnen dargestellt ist.

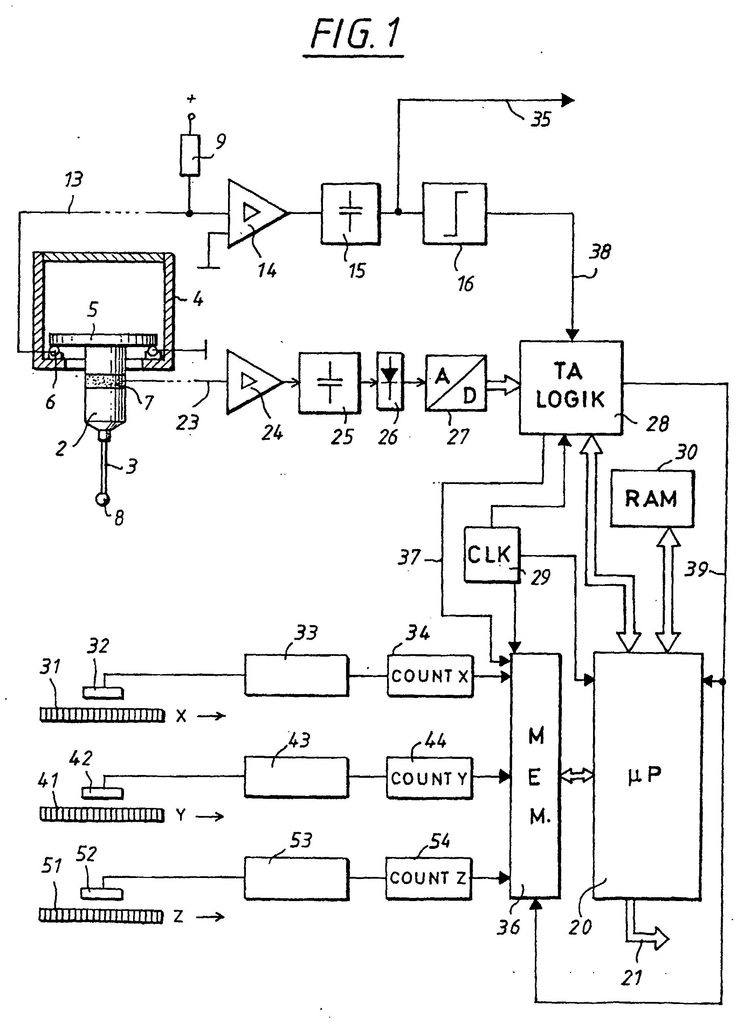

In der Figur 1 ist der Tastkopf eines Koordinatenmeßgerätes und zwar einer vom schaltenden Typ vereinfacht dargestellt. Wie man sieht ist der Taststift (3) mit der Tastkugel (8) an einem nachgiebig auf Kugeln (6) gelagerten Träger (2) befestigt. was die Lagerung anbetrifft, so bilden drei Zylinderkörper an der Unterseite des Bunds (5) am Träger (2), die in drei jeweils um 120° versetzt angeordnete Kugelpaare am gehäusefesten Teil (4) eingreifen, eine elektrische Reihenschaltung. Beim Auslenken des Taststifts (3) nach Berührung der Tastkugel (8) mit dem Werkstück öffnet mindestens einer der drei Schalter der Reihenschaltung, wodurch ein elektrisches Schaltsignal erzeugt wird. Die signalleitung dieses ersten Schaltsignales ist mit (13) bezeichnet. Das Schaltsignal (13) gelangt über eine Verstärkerstufe (14) und eine Filterstufe (15) sowie eine Impulsformerstufe (16) zur Tastkopflogik (28).

Weiterhin besitzt der Tastkopf im Träger (2) für den Taststift (3) einen piezoelektrischen Sensor (7), der über eine zweite Signalleitung (23) mit dem Eingang eines zweiten Vorverstärkers (24) verbunden ist.

Dem Verstärker (24) ist ein Hochpaßfilter (25) nachgeschaltet, das den reinen Gleichanteil des Signals abblockt. Auf das Filter folgt eine Gleichrichterstufe (26). Dieser ist ein Analog-/Digitalwandler (27) nachgeschaltet.

Der Ausgang des Analog-/Digitalwandlers (27) ist mit der Tastkopflogik (28) verbunden. Die Tastkopflogik (28) enthält einen Prozessor zur Vorverarbeitung des Tastsignals sowie einen rollierenden Speicher, in dem der zeitliche Verlauf des Tastsignals über einen Zeitraum von z.B. 25,6 Millisekunden in Abständen von z.B. 100 Mikrosekunden gespeichert wird, d.h. in diesem Speicher steht der zeitliche Verlauf des Tastsignals innerhalb der letzten 25,6 Millisekunden auf Abruf durch den Mikroprozessor (20) bereit.

Der Tastkopf selbst ist am beweglichen Meßarm eines hier nicht näher dargestellten Koordinatenmeßgerätes befestigt. Den drei Meßschlitten des Koordinatenmeßgerätes sind zur Erfassung der Längenmeßwerte in den drei Koordinatenrichtungen (x, y und z) drei Maßstäbe (31, 41 und 51) zugeordnet, die von Leseköpfen (32, 42 und 52) abgetastet werden. Die von den Leseköpfen gelieferten Signalfolgen der inkrementalen Meßsysteme sind nach digitaler Interpolation in drei Interpolatoren (33, 43 und 53) Zählerbausteinen (34, 44 und 54) zugeführt. Die Zählerausgänge sind mit einer zweiten rollierenden Speichereinheit (36) verbunden, in der dann der zeitliche Verlauf der Zählerstände ebenfalls mit einer Auflösung von z.B. 100 Mikrosekunden über einen Zeitraum von 25,6 Millisekunden abgelegt werden. Beide rollierenden Speicher, Speicher (36) und der rollierende Speicher in der Tastkopflogik (28) sind mit dem Mikroprozessor (20) über den Taktgeber (29) synchronisiert, so daß die exakte zeitliche Beziehung zwischen dem Tastsignalverlauf und der Position des Tastkopfs gewährleistet ist.

Bei einem Antastvorgang übersteigt das vom Piezokristall (7) abgegebene Signal (23) nach Durchgang durch den Hochpaß (25) und nach Gleichrichtung (26) irgendwann eine in der Tastkopflogik (28) gesetzte Schwelle von z.B. 200 Einheiten (relative Intensität). Das geschieht zu einem Zeitpunkt, der später als der eigentliche Antastzeitpunkt (tk) liegt, zu dem das zu vermessende Werkstück erstmalig von der Tastkugel (8) berührt wurde, nämlich dann, wenn die Signalintensität durch die sich aufbauende Meßkraft zwischen Kugel und Werkstück die eingestellte Schwelle erreicht. Zu diesem Zeitpunkt t = 0 wird der rollierende Speicher in der Tastkopflogik (28) und auch der rollierende Speicher (36) über die Signalleitung (37) "eingefroren". Die Tastkopflogik (28) wartet jetzt auf das Schaltsignal aus den sich noch etwas später öffnenden Lagerstellen (6) des Tastkopfs. Wenn das Signal auf der Leitung (38) eintrifft, gibt die Tastkopflogik (28) den Antastvorgang "gültig" und schickt einen entsprechenden Signalimpuls über die Signalleitung (39) an einen Digitaleingang des Mikroprozessors (20).

Sobald das eintritt, wird das im Speicher der Tastkopflogik (28) zwischengespeicherte Tastsignal und werden die im Speicher (36) vorhandenen zeitlichen Verläufe der Längenmeßwerte (x, y und z) vom Mikroprozessor (20) aus den rollierenden Zwischenspeichern (28 und 36) geholt und in einem flüchtigen Speicher (30) abgelegt. Die weitere Verarbeitung der abgerufenen Meßwerte erfolgt dann gemäß einem in der Firmware des Mikroprozessors (20) programmiertem Ablauf. Dieser Ablauf ist in dem Flußdiagramm nach Figur 3 dargestellt und wird nachfolgend näher beschrieben:

Zuerst wird das Tastsignal durch einen phasenkorrigierten Filteralgorithmus leicht geglättet, um Störspitzen zu unterdrücken. Digitale Filteralgorithmen für diesen Zweck sind an sich bekannt, so daß darauf nicht näher eingegangen werden muß.

Anschließend wird der Tastsignalverlauf während der ersten 15,6 gespeicherten Millisekunden, in denen sich das Koordinatenmeßgerät noch im sogenannten Antastsuchweg vor der jeweiligen Antastung befand, für die Generierung einer dynamischen Triggerschwelle ausgewertet. In dieser Zeit "rauscht" das Signal lediglich und die dynamische Triggerschwelle wird auf den doppelten Wert der in diesem Zeitraum gefundenen maximalen Rauschamplitude gesetzt. Der Minimalwert der dynamischen Triggerschwelle ist allerdings einstellbar bzw. kann dem Mikroprozessor (20) vorgegeben werden.

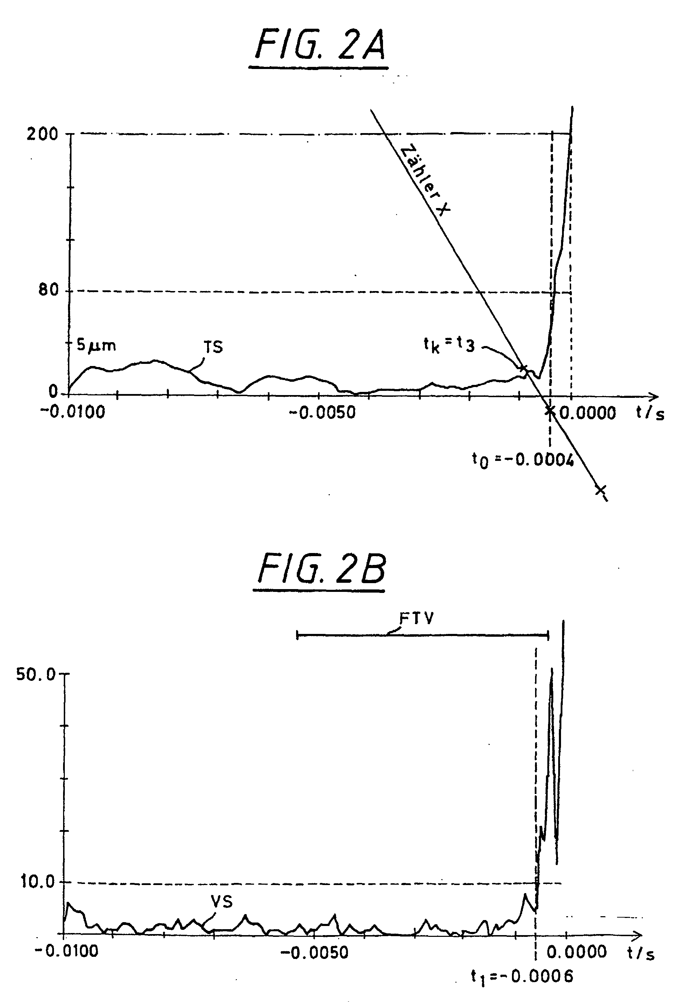

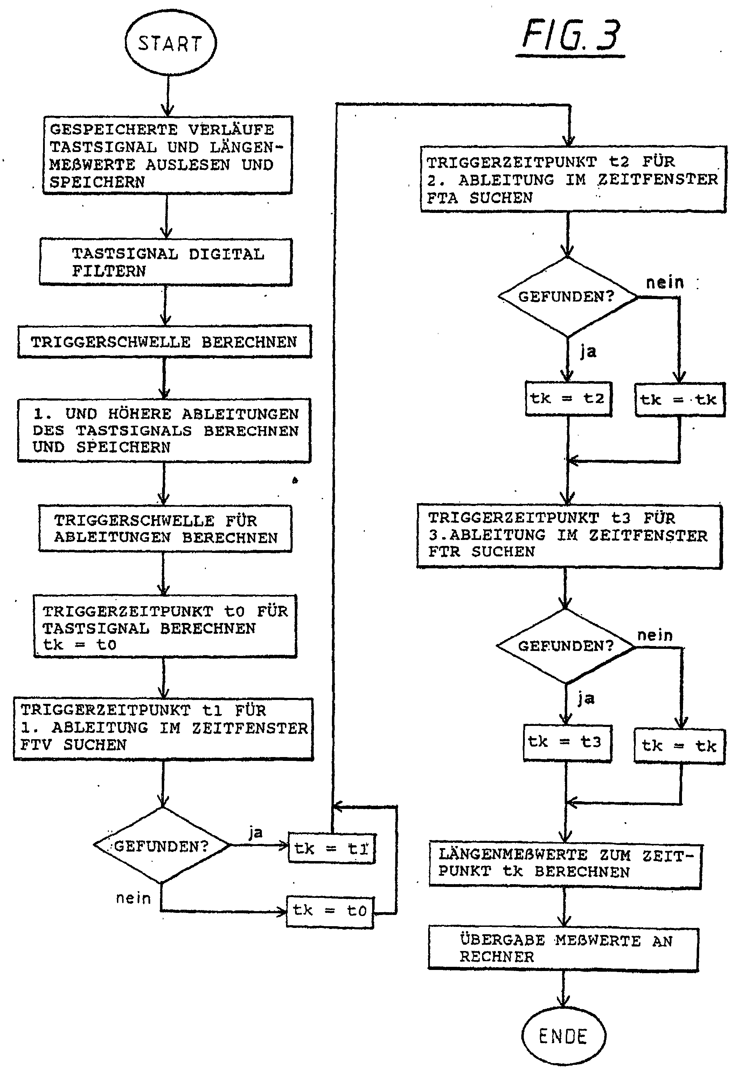

Der auf die ersten 15,6 Millisekunden folgende weitere Signalverlauf über 10 Millisekunden, der dann den eigentlichen Antastvorgang mit enthält, ist in dem Diagramm nach Figur 2a dargestellt. Dort ist das geglättete Tastsignal mit TS bezeichnet. Die waagerechte strichpunktierte Linie bei 200 Intensitätseinheiten beschreibt den gesetzten Schwellwert für das Einfrieren der rollierenden Speicher zum Zeitpunkt (t = 0), der den Beginn bzw. das Ende der gespeicherten Meßfolge für das Tastsignal definiert. Die waagerechte gestrichelte Linie darunter zeigt die vorstehend beschriebene dynamische Triggerschwelle an, die in diesem Falle auf einen Wert von 80 Intensitätseinheiten gesetzt ist und zur genauen Bestimmung des eigentlichen Antastzeitpunkts (tk) dient.

Außerdem berechnet der Mikroprozessor (20) durch Differenzbildung aufeinander folgender Werte des Tastsignals (ts) die erste Ableitung des Tastsignals nämlich das Geschwindigkeitssignal (VS). Dieses Signal ist in Figur 2b dargestellt und zwar dort für den gleichen Zeitraum von 10 Millisekunden vom Auftreten des Schaltsignals rückwärts gerechnet.

Auch für die erste zeitliche Ableitung (VS) wird aus den zeitlich weiter zurückliegenden Werten eine Triggerschwelle berechnet. Dies ist wieder die gestrichelt dargestellte waagerechte Linie, die die Koordinate bei dem Wert 10 Intensitätseinheiten schneidet. Sie beträgt das doppelte der maximalen Rauschamplitude des Signals (VS).

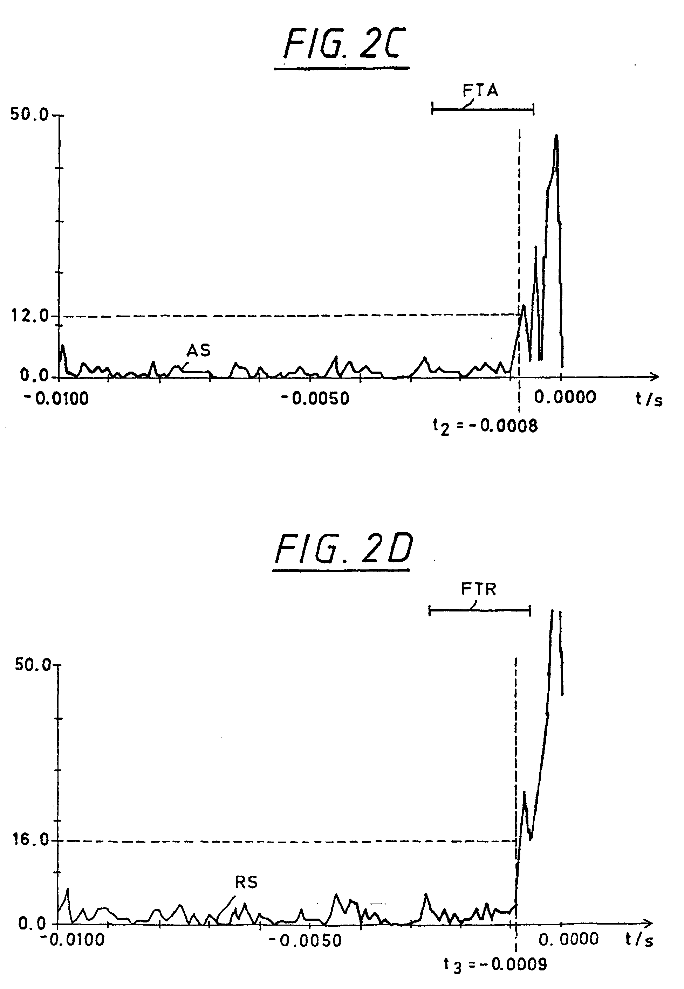

Ebenfalls durch Differenzbildung aufeinander folgender Meßpunkte wird aus dem Signal (VS) durch den Mikroprozessor (20) die zweite zeitliche Abbildung des Tastsignals gebildet. Deren Absolutwerte (rechnerische Gleichrichtung) sind als Beschleunigungssignal (AS) in Figur 2c dargestellt.

Auch für das Signal (AS) wird wieder eine Triggerschwelle generiert, die wie die Darstellung nach Figur 2c zeigt auf einen Wert von 12 Intensitätseinheiten berechnet wurde.

Schließlich berechnet der Mikroprozessor (20) aus dem gleichgerichteten Beschleunigungssignal (AS) das sogenannte Rucksignal (RS) als gleichgerichtete dritte zeitliche Ableitung des Tastsignals (TS). Der Verlauf dieses Signals ist in Figur 2d dargestellt. Die Triggerschwelle ergibt sich aus dem zeitlich vorherliegenden, nicht dargestellten Verlaufs dieses Signals zu 16 Intensitätseinheiten.

Die in den Figuren 2a - d dargestellten vier Signalverläufe, das Tastsignal und seine drei zeitlichen Ableitungen, werden vom Mikroprozessor im RAM (30) gespeichert und anschließend zur Bestimmung des Antastzeitpunkts weiter ausgewertet. Zuerst wird abgefragt, zu welchem Zeitpunkt das geglättete Tastsignal (TS) die Triggerschwelle erreicht hat. Das ist im dargestellten Beispiel bei dem Meßpunkt der Fall, der auf den Zeitpunkt -400 µs folgt. Somit ordnet der Mikroprozessor (20) dem Antastzeitpunkt (tk) vorerst diesen Zeitpunkt t0 = - 400 µs zu.

Anschließend fragt der Mikroprozessor (20) das Geschwindigkeitssignal (VS) daraufhin ab, wann dieses das erste Mal innerhalb eines Zeitfensters (FTV) von 5 Millisekunden vor dem Zeitpunkt (t0) die bei 10 Intensitätseinheiten gesetzte Triggerschwelle erreicht hat. Das ist beim Zeitpunkt t1 = -600 µs der Fall. Entsprechend wird der Antastzeitpunkt (tk) korrigiert und auf diesen Zeitpunkt t1 = -600 µs gesetzt. Würde die Triggerschwelle innerhalb des Zeitfensters (FTV) nicht erreicht, bliebe der vom Tastsignal abgeleitete Wert (t0) weiter gültig und würde als Antastzeitpunkt weiterbehandelt.

Im nächsten Schritt wertet der Mikroprozessor (20) das Beschleunigungssignal (AS) aus und fragt ab, wann dieses Signal in einem Zeitfenster (FTA) von 2 Millisekunden die auf 12 bit eingestellte Triggerschwelle für dieses Signal erreicht hat. Das ist zum Zeitpunkt t2 = -800 µs der Fall. Entsprechend wird dieser Zeitpunkt (t2) dem Antastzeitpunkt (tk) neu zugeordnet. Auch hier gilt wieder, daß der alte Wert (t1) für (tk) beibehalten würde, falls die Triggerschwelle in dem Zeitfenster (FTA) nicht erreicht wird.

Schließlich wird in gleicher Weise das Rucksignal (RS) (Figur 2d) daraufhin abgefragt, ob die eingestellte Triggerschwelle von 16 Intensitätseinheiten innerhalb eines dritten Zeitfensters (FTR) von ebenfalls 2 Millisekunden gerechnet vom Triggerzeitpunkt (t1) des Geschwindigkeitssignals in Richtung "Vergangenheit" erreicht worden ist und der betreffende Zeitpunkt (t3) von in diesem Beispiel -900 µs wird nun entgültig dem Antastzeitpunkt (tk) zugeordnet. Der Mikroprozessor (20) berechnet nun mit Hilfe des so gewonnenen Antastzeitpunkts (tk) aus den über die Zeit gespeicherten Zählerständen der Längenmeßsysteme (31/32, 41/42, 51/52) die Antastkoordinaten und gibt diese über die Datenleitung (21) an den Auswerterechner des Koordinatenmeßgerätes weiter.

Das Ergebnis ist ebenfalls in Figur 2 veranschaulicht. Dort ist mit der fallenden durchgezogenen Geraden der Verlauf des Zählerstands für die x-Koordinate bei dem dargestellten beispielhaften Antastvorgangs mit über die Zeit aufgetragen. Zwischen dem Zählerstand zum Zeitpunkt (t0), zu dem das eigentliche Tastsignal triggerte, und dem Zählerstand zum Zeitpunkt tk = t3, zu dem die dritte zeitliche Ableitung, das Rucksignal triggerte, liegen 500 µs, was bei einer Antastgeschwindigkeit von 10mm/s einem Weg von 5 µm entspricht. Bei weichen Werktücken steigt die Intensität des Tastsignals noch wesentlich langsamer an, so daß in solchen Fällen die Zeitpunkte t0 - t3 bedeutend weiter auseinander liegen und die erreichbare Genauigkeitssteigerung gegenüber dem bisher bekannten Auswerteverfahren noch um ein mehrfaches höher liegt. Solche langsam ansteigenden Signalverläufe bedingen dann evtl. auch längere Zeitfenster (FTV, FTA und FTR). Es ist deshalb zweckmäßig, diese Zeitfenster über den Rechner des Koordinatenmeßgerätes einstellbar auszuführen.

Mit den beschriebenen Maßnahmen ist es erstmals möglich geworden, überhaupt weiche Teile ausreichend genau zu vermessen.

In dem beschriebenen Ausführungsbeispiel sind die zeitlichen Ableitungen des Tastsignals rechnerisch mittels eines geeigneten Firmwareprogramms durch Differenzbildung der Einzelmeßwerte gewonnen worden. Es ist jedoch auch möglich, die differenzierten Signale mit geeigneten elektronischen Bausteinen, d.h. hardwaremäßig zu generieren und auszuwerten.

Auf die beschriebene Weise wird der Antastzeitpunkt also mit Hilfe der höheren zeitlichen Ableitungen des eigentlichen Tastsignals zeitlich "vorverlegt" und somit dem "wahren" Antastzeitpunkt angenähert. Versuche haben ergeben, daß der so ermittelte Antastzeitpunkt (tk) sehr gut mit dem Zeitpunkt des allerersten Berührens der Tastkugel mit dem Werkstück übereinstimmt.

Bisher wurde das neue Verfahren in Verbindung mit einem Tastkopf vom schaltenden Typ erläutert. Es kann jedoch auch in Verbindung mit Tastköpfen vom messenden Typ benutzt werden, wenn diese zu Einzelpunktmessungen eingesetzt werden. In dem Falle wird das analoge Signal der Wegmeßsystme im Tastkopf für die drei Auslenkrichtungen in gleicher Weise zeitlich mehrfach differenziert und getriggert, wie das Piezosignal eines Tastkopfs vom schaltenden Typ.

## Patentansprüche

1. Verfahren zur Koordinatenmessung an Werkstücken auf einem Koordinatenmeßgerät mit einem Tastkopf, der ein Signal (23) bei Berührung des zu vermessenden Werkstücks erzeugt, wobei der zeitliche Verlauf des Tastsignals gespeichert und nach der Zeit differenziert wird und die erste und/oder höhere Ableitungen (VS, AS, RS) des Tastsignalverlaufs zur Ermittlung des genauen Antastzeitpunkts (tk) ausgewertet werden.

2. Verfahren nach Anspruch 1, wobei zur Auswertung des Tastsignals eine oder mehrere Triggerschwellen gesetzt werden und der Antastzeitpunkt (tk) dem Zeitpunkt (t1, t2, t3) zugeordnet wird, zu dem mindestens eine oder mehrere der zeitlichen Ableitungen (VS, AS, RS) des Tastsignals (TS) die jeweilige Triggerschwelle erreichen.

3. Verfahren nach Anspruch 2, wobei die Triggerschwellen einstellbar sind.

4. Verfahren nach Anspruch 2, wobei die Triggerschwellen automatisch an die Rauschamplitude des Tastsignals (TS) oder seiner zeitlichen Ableitungen (VS, AS, RS) angepaßt werden.

5. Verfahren nach Anspruch 1, wobei nur eine Ableitung des Tastsignals ausgewertet wird.

6. Verfahren nach Anspruch 1, oder 2 wobei mehrere Ableitungen (VS, AS, RS) des Tastsignals ausgewertet werden.

7. Verfahren nach Anspruch 2 und 6, wobei der Antastzeitpunkt (tk) dem frühesten Zeitpunkt (t3) zugeordnet wird, zu dem eine der für die verschiedenen Ableitungen (VS, AS, RS) gesetzten Triggerschwellen erreicht ist.

8. Verfahren nach einem der Ansprüche 1 - 7, wobei der zeitliche Verlauf (TS) des Tastsignals und die vom Koordinatenmeßgerät gelieferten Längenmeßwerte (x, y, z) gespeichert werden und zur Ermittlung des genauen Antastzeitpunkts (tk) das gespeicherte Tastsignal digital differenziert wird.

9. Verfahren nach einem der Ansprüche 1 - 8, wobei das Tastsignal (TS) vor der Differenzierung gefiltert, vorzugsweise durch ein phasenkorrigiertes Bandpaßfilter geglättet wird.

10. Verfahren nach einem der Ansprüche 1 - 9, wobei das Tastsignal (TS) vor der Differenzierung gleichgerichtet wird.

11. Koordinatenmeßgerät mit einem Tastkopf, der ein Tastsignal (23) bei Kontakt mit dem zu vermessenden Werkstück erzeugt, wobei
- das Signal (23) einer ersten Speichereinheit (28) zugeführt ist, in der der zeitliche Verlauf (TS) des Tastsignals speicherbar ist,
- eine zweite Speichereinheit (36) vorgesehen ist, in der die Längenmeßwerte (x, y, z) für die Position des Tastkopfs mindestens für ein Zeitintervall speicherbar sind, welches den Zeitpunkt (tk) des Kontakts mit dem Werkstück enthält,
- die Speichereinheiten (28, 36) mit einer Auswerteeinheit (20) verbunden sind, die nachträglich aus dem zeitlichen Verlauf (TS) des Tastsignals den exakten Kontaktzeitpunkt (tk) bzw. die dazu korrespondierende exakte Kontaktposition ermittelt,
- die Auswerteeinheit (20) Mittel zur Differenzierung des Tastsignals (TS) besitzt, sowie Mittel zur Feststellung, ob die Amplitude des ein- oder mehrfach differenzierten Tastsignals (VS, AS, RS) einen einstellbaren Schwellwert erreicht hat.

## Claims

1. Method for coordinate measurement on workpieces on a coordinate measuring instrument having a probe which generates a signal (23) upon touching the workpiece to be measured, the time profile of the probe signal being stored and differentiated with respect to time, and the first and/or higher derivatives (VS, AS, RS) of the probe signal profile being evaluated in order to determine the exact instant of contact (tk).

2. Method according to Claim 1, in which one or more trigger thresholds are set in order to evaluate the probe signal, and the instant of contact (tk) is assigned to the instant (t1, t2, t3) at which at least one or more of the time derivatives (VS, AS, RS) of the probe signal (TS) reach the respective trigger threshold.

3. Method according to Claim 2, in which the trigger thresholds are adjustable.

4. Method according to Claim 2, in which the trigger thresholds are adapted automatically to the noise amplitude of the probe signal (TS) or its time derivatives (VS, AS, RS).

5. Method according to Claim 1, in which only one derivative of the probe signal is evaluated.

6. Method according to Claim 1 or 2, in which a plurality of derivatives (VS, AS, RS) of the probe signal are evaluated.

7. Method according to Claims 2 and 6, in which the instant of contact (tk) is assigned to the earliest instant (t3) at which one of the trigger thresholds set for the various derivatives (VS, AS, RS) is reached.

8. Method according to one of Claims 1-7, in which the time profile (TS) of the probe signal and the measured length values (x, y, z) supplied by the coordinate measuring instrument are stored, and the stored probe signal is differentiated digitally in order to determine the exact instant of contact (tk).

9. Method according to one of Claims 1-8, in which the probe signal (Ts) is filtered before differentiation, and preferably smoothed by a phase-corrected bandpass filter.

10. Method according to one of Claims 1-9, in which the probe signal (TS) is rectified before differentiation.

11. Coordinate measuring instrument having a probe which generates a probe signal (23) upon contact with the workpiece to be measured, in which
- the signal (23) is fed to a first memory unit (28) in which the time profile (TS) of the probe signal can be stored,
- a second memory unit (23) is provided in which the measured length values (x, y, z) for the position of the probe can be stored at least for a time interval which includes the instant (tk) of contact with the workpiece,
- the memory units (28, 36) are connected to an evaluation unit (20) which subsequently uses the time profile (TS) of the probe signal to determine the exact instant of contact (tk) or the exact contact position corresponding thereto, and
- the evaluation unit (20) has means for differentiating the probe signal (TS) and means for establishing whether the amplitude of the probe signal (VS, AS, RS), which is differentiated once or several times, has reached an adjustable threshold value.

## Revendications

1. Procédé pour la mesure des coordonnées de pièces sur un appareil de mesure de coordonnées doté d'une tête palpeuse qui crée un signal (23) lors de son contact avec la pièce à mesurer, dans lequel l'évolution dans le temps du signal de palpage est conservée en mémoire, sa dérivée par rapport au temps est formée et les dérivées premières et/ou dérivées d'ordre plus élevé (VS, AS, RS) de l'évolution du signal de palpage sont évaluées pour calculer l'instant précis du palpage (tk).

2. Procédé selon la revendication 1, dans lequel pour l'évaluation du signal de palpage, on définit un ou plusieurs seuils de déclenchement, et l'instant de palpage (tk) est associé à l'instant (t1, t2, t3) auquel au moins une ou plusieurs des dérivées par rapport au temps (VS, AS, RS) du signal de palpage (TS) atteignent les seuils de déclenchement correspondants.

3. Procédé selon la revendication 2, dans lequel les seuils de déclenchement sont ajustables.

4. Procédé selon la revendication 2, dans lequel les seuils de déclenchement sont adaptés automatiquement à l'amplitude du bruit du signal de palpage (TS) ou de ses dérivées par rapport au temps (VS, AS, RS).

5. Procédé selon la revendication 1, dans lequel on n'évalue qu'une seule dérivée du signal de palpage.

6. Procédé selon la revendication 1 ou 2, dans lequel on évalue plusieurs dérivées (VS, AS, RS) du signal de palpage.

7. Procédé selon les revendications 2 et 6, dans lequel l'instant de palpage (tk) est associé à l'instant (t3) le plus précoce auquel un des seuils de déclenchement défini pour les différentes dérivées (VS, AS, RS) est atteint.

8. Procédé selon l'une des revendications 1 à 7, dans lequel l'évolution dans le temps (TS) du signal de palpage et les valeurs de mesure de longueur (x, y, z) délivrées par l'appareil de mesure de coordonnées sont conservées en mémoire, le signal de palpage conservé en mémoire étant dérivé numériquement pour déterminer l'instant précis de palpage (tk).

9. Procédé selon l'une des revendications 1 à 8, dans lequel le signal de palpage (TS) est filtré avant d'être dérivé, et de préférence lissé par un filtre passe-bande à correction de phase.

10. Procédé selon l'une des revendications 1 à 9, dans lequel le signal de palpage (TS) est redressé avant d'être dérivé.

11. Appareil de mesure de coordonnées doté d'une tête palpeuse qui crée un signal de palpage (23) au contact avec la pièce à mesurer, dans lequel :
- le signal (23) est transféré à une première unité de mémoire (28) dans laquelle l'évolution dans le temps (TS) du signal de palpage peut être conservée en mémoire,
- une deuxième unité de mémoire (36) est prévue, dans laquelle les valeurs de mesure de longueur (x, y, z) de la position de la tête de palpage peuvent être conservées en mémoire au moins pendant un intervalle de temps qui contient l'instant (tk) du contact avec la pièce,
- les unités de mémoire (28, 36) sont reliées à une unité d'évaluation (20) qui détermine ultérieurement à partir de l'évolution dans le temps (TS) du signal de palpage l'instant exact du contact (tk) et la position exacte de contact qui y correspond,
- l'unité d'évaluation (20) possède des moyens pour dérivé le signal de palpage (TS) ainsi que des moyens pour déterminer si l'amplitude du signal de palpage (VS, AS, RS) qui a été dérivé une ou plusieurs fois a atteint une valeur de seuil ajustable.
